# FASCICULE DE BREVET EUROPEEN

(11) **EP 3 001 027 B1**
(45) Date de publication et mention de la délivrance du brevet: **28.11.2018**
(21) Numéro de dépôt: 15186158.0
(22) Date de dépôt: 22.09.2015
(51) Int. Cl.: F02P 5/15, F02P 5/152, F02D 41/24

(54) **Procédé de réglage de l'avance à l'allumage d'un moteur à allumage commandé**
Verfahren zur Einstellung der Vorzündung eines Motors mit gesteuerter Zündung
Method for adjusting the ignition advance of a spark ignition engine

(30) Priorité: 24.09.2014 FR 1459034
(43) Date de publication de la demande: 30.03.2016
(73) Titulaire: PSA Automobiles SA, 78300 Poissy (FR)
(72) Inventeur: Parodi, Julien, 06600 Antibes (FR); Brenot, Sebastien, 25400 Audincourt (FR); Dambricourt, Frederic, 78600 Maisons Laffitte (FR)

(56) Documents cités:
- FR-A1- 2 937 383
- FR-A1- 2 986 278
- FR-A1- 2 987 404
- FR-A1- 2 987 652

## Description

L'invention a trait au réglage des moteurs à explosion à allumage commandé et plus précisément à la correction curative et adaptative de l'avance à l'allumage de ces moteurs. Une correction de l'avance à l'allumage est divulguée dans le document FR 2 986 278 A1.

Un moteur à explosion à allumage commandé est alimenté, lors de chaque cycle (à deux ou à quatre temps), par un mélange comprenant de l'air et du carburant (mélange air/carburant).

Nous étudierons, ci-après, un moteur à quatre temps, ce moteur comprenant au moins un cylindre et un piston mobile dans le cylindre.

Chaque cycle comprend quatre temps, ci-après nommés phases, à savoir, une phase d'admission, une phase de compression, une phase de combustion-détente et une phase d'échappement, la phase étant initiée par l'allumage du mélange air/carburant comprimé, via une bougie d'allumage contrôlée par un calculateur moteur (ou contrôle moteur).

Afin d'optimiser les performances du moteur, tant en terme de puissance qu'en terme de consommation, l'allumage est déclenché en amont d'une position extrême dite « point mort haut » (PMH) du piston dans le cylindre, à l'issue de la phase de compression.

Afin de pouvoir régler l'allumage, les motoristes utilisent un paramètre appelé « avance à l'allumage » correspondant à un décalage entre l'instant d'allumage et l'instant du passage du piston en position PMH, la position PMH étant la position de référence.

L'avance à l'allumage est matérialisée par un écart angulaire (ou angle de rotation) ayant pour référentiel un vilebrequin mu, via des bielles, par le mouvement des pistons du moteur.

Les moteurs à allumage commandé sont soumis au cliquetis, phénomène d'auto-inflammation connu des motoristes, engendrant la combustion spontanée à contretemps d'une partie du mélange air/carburant indépendamment de l'étincelle de la bougie d'allumage.

Le cliquetis peut provoquer des nuisances sonores au sein de l'habitacle, une dégradation accélérée des éléments moteur (notamment des pistons) ou encore une augmentation de la consommation de carburant.

L'apparition du cliquetis est attribuable à différents facteurs, comme par exemple l'utilisation d'un carburant dégradé.

Lors de l'assemblage du véhicule, les moteurs à allumage commandé sont programmés pour fonctionner avec un carburant ayant un indice d'octane ou un RON, (acronyme de l'anglais Research Octane Number) prédéfini en fonction de la zone géographique dans laquelle le véhicule est utilisé, ce réglage permettant d'éviter les cliquetis.

L'indice d'octane mesure la résistance d'un carburant utilisé dans un moteur à allumage commandé à l'auto-allumage, c'est à dire allumage sans intervention de la bougie. Par exemple, un carburant un RON de 95 est un carburant dont 95% de sa composition est résistante à l'auto allumage.

Le RON varie selon les pays. C'est pourquoi il est nécessaire d'adapter le fonctionnement du moteur à la qualité du carburant pour prévenir le cliquetis. Il est ainsi entendu qu'un carburant dégradé est un carburant ayant un indice d'octane plus faible, autrement dit, un carburant moins raffiné.

Différentes corrections complémentaires entre elles, lors de la détection du cliquetis par capteur (par exemple capteur piézoélectrique), sont mises en place au niveau du calculateur moteur, ces corrections visant à modifier l'avance à l'allumage pour permettre de réduire et, dans le meilleur des cas, d'annuler le cliquetis.

Parmi ces corrections, on trouve d'une part une correction curative visant à réduire rapidement le phénomène de cliquetis lors de son apparition. Cette correction curative consiste à appliquer un retrait de l'avance à l'allumage à chaque détection du cliquetis, puis à tendre vers une valeur initiale de l'avance à l'allumage lorsqu'il n'y a plus de cliquetis sur une durée suffisamment importante (environ égale à 10s).

On trouve d'autre part une correction dite adaptative ou par apprentissage qui utilise tout ou partie de la correction curative appliquée lorsque les conditions de fonctionnement ont fait apparaître du cliquetis afin d'effectuer une série d'opérations (et notamment une moyenne des corrections curatives) permettant d'obtenir un retrait de « l'avance à l'allumage » qui sera appliqué ultérieurement dans des conditions de fonctionnement proches pour limiter le phénomène de cliquetis. Cet apprentissage permet notamment de corriger les dérives liées à l'usure du moteur, à son encrassement, aux dispersions entre deux moteurs, ainsi qu'à la qualité du carburant.

Le calculateur contrôle le couple du moteur, par l'intermédiaire notamment de l'allumage, en répondant à la demande du conducteur (issue d'un capteur positionné sur la pédale d'accélérateur) mais dans certaines phases d'utilisation du véhicule, le calculateur ignore la demande du conducteur pour maintenir l'agrément de conduite (on parle également de fonctionnement en bouclage « structure couple ») par exemple lors d'un démarrage en côte ou lors d'un changement de vitesse.

Actuellement, lorsque le calculateur fonctionne en « structure couple », le calcul de la correction adaptative est désactivé. En effet, lors de ces phases d'utilisation, « l'avance à l'allumage » subit souvent de fortes variations entraînant, à tort, la détection de cliquetis et ainsi limitant la possibilité d'adapter rapidement le couple moteur. De plus, ces phases d'utilisation en bouclage « structure couple » n'engendrent que très rarement du cliquetis à forte intensité.

Or, les motoristes cherchent actuellement à développer des moteurs de plus faible cylindrée suralimentés (par l'ajout éventuel d'un turbocompresseur de suralimentation) permettant de diminuer la consommation de carburant (et donc les émissions polluantes) tout en maintenant le confort de conduite et la puissance du moteur (développement également appelé sous la désignation anglaise « downsizing »). Il résulte de ce développement qu'il y a de plus en plus de phases d'utilisations soumises au cliquetis.

Un premier objectif est de proposer un procédé de réglage de l'avance à l'allumage permettant d'accroître le champ d'action d'une correction adaptative afin de couvrir un maximum de phases d'utilisation d'un véhicule automobile soumises au cliquetis.

Un deuxième objectif est de proposer un calculateur destiné à la mise en oeuvre d'un procédé de réglage de l'avance à l'allumage répondant à l'objectif ci-dessus exprimé.

Un troisième objectif est de proposer un véhicule automobile comprenant un calculateur répondant à l'objectif ci-dessus exprimé.

A cet effet, il est proposé en premier lieu, un procédé de réglage de l'avance à l'allumage d'un moteur à allumage commandé comprenant un cylindre et équipant un véhicule destiné à être conduit par un conducteur, le procédé étant piloté par un calculateur comprenant :
- une procédure de correction curative visant à réduire rapidement le phénomène de cliquetis lors de son apparition,
- un mode de contrôle du couple moteur dit autonome ignorant la volonté du conducteur,
- un mode de contrôle du couple moteur dit subordonné prenant en compte la volonté du conducteur,
- une procédure d'apprentissage d'une correction de l'avance à l'allumage qui utilise tout ou partie de la correction curative appliquée lorsque les conditions de fonctionnement ont fait apparaître du cliquetis,
Cette procédure d'apprentissage étant autorisée lorsque le mode de contrôle du couple moteur est subordonné et qu'un ensemble de paramètres de fonctionnement moteur prédéterminés dépassent tous à la hausse des seuils primaires respectifs.
Le procédé étant caractérisé en ce que cette procédure d'apprentissage est autorisée également en mode de contrôle du couple moteur autonome lorsque l'ensemble de paramètres de fonctionnement moteur prédéterminés dépassent tous à la hausse leurs seuils primaires respectifs et que de plus la charge du cylindre dépasse à la hausse un seuil secondaire de charge déterminé.

Selon l'invention, l'ensemble de paramètres de fonctionnement moteur déterminés comprend :
- Le régime moteur RM ;
- Une température moteur TM;
- Une information représentative de la charge du cylindre;
ce procédé comprenant alors les étapes suivantes :
- comparaison du régime moteur RM à un seuil primaire de régime moteur SRM prédéfini ;
- comparaison de la charge du cylindre à un seuil primaire de charge du cylindre prédéfini ;
- comparaison de la température moteur TM à un seuil primaire de température moteur STM prédéfini ;
- détection que ces paramètres dépassent tous à la hausse leurs seuils primaires respectifs.

De préférence pour des raisons de simplicité de mesure, l'information représentative de la charge du cylindre est un taux de remplissage du cylindre TRC, le seuil primaire de charge prédéfini correspondant à un seuil primaire de taux de remplissage du cylindre SPTRC et le seuil secondaire de charge correspondant à un seuil secondaire de taux de remplissage du cylindre SSTRC.

De préférence encore, le seuil secondaire de taux de remplissage du cylindre SSTRC est déterminé à partir du régime moteur RM et d'une cartographie.

De préférence encore, le seuil secondaire de taux de remplissage du cylindre SSTRC est au moins égal à 80% du taux de remplissage maximum du cylindre.

En variante, le seuil primaire de régime moteur SRM, les seuils primaire et secondaire de taux de remplissage du cylindre SPTRC, SSTRC et le seuil primaire de température moteur STM sont réglables.

En variante encore, la température moteur TM est une température du liquide refroidissement au niveau du cylindre.

Il est proposé, en second lieu, un calculateur comprenant les moyens d'acquisition, de traitement par instructions logicielles stockées dans une mémoire ainsi que les moyens de commande requis à mise en oeuvre du procédé de réglage de l'avance à l'allumage ci-dessus décrit.

Il est proposé, en troisième lieu, un véhicule automobile comprenant un moteur à allumage commandé piloté par un calculateur ci-dessus décrit.

D'autres objets et avantages de l'invention apparaîtront à la lumière de la description d'un mode de réalisation, faite ci-après en référence aux dessins annexés dans lesquels :
- la figure 1 est une vue en perspective d'un véhicule automobile comprenant un moteur à allumage commandé ;
- la figure 2 est une vue schématique en coupe du moteur selon un plan transversal passant par le centre d'un cylindre du moteur ;
- la figure 3 est un diagramme logique d'un procédé de réglage de l'avance à l'allumage.

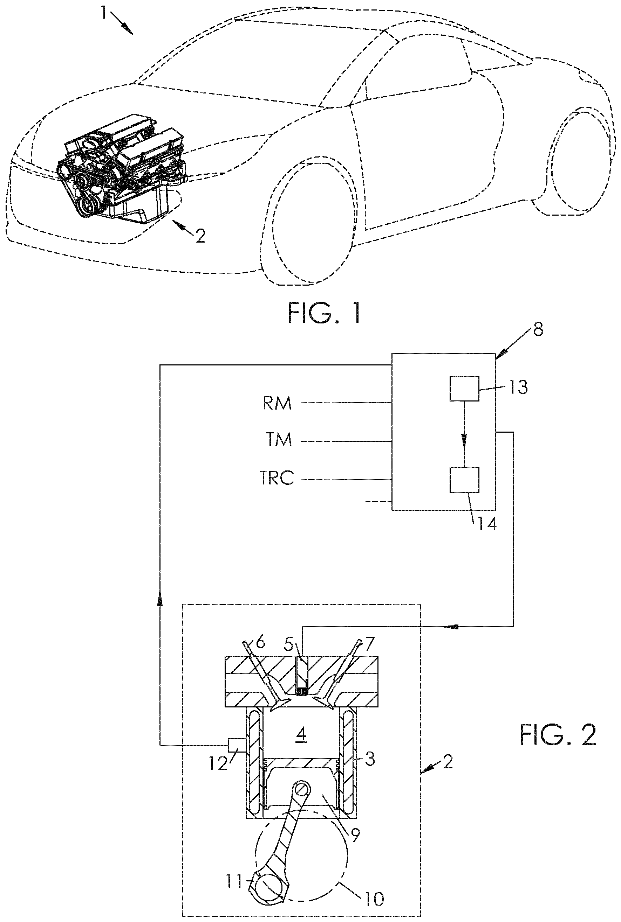

Sur la figure 1 est représenté un véhicule **1** automobile comprenant un moteur **2** à combustion interne à allumage commandé (appellation faisant référence à la combustion qui le caractérise) ou plus couramment appelé moteur **2** essence. Le moteur **2** comprend au minimum un cylindre **3** définissant une chambre **4** de combustion, tel que représenté schématiquement pour des raisons de clarté sur la figure 2, auquel est associée, dans une portion supérieure, une bougie **5** d'allumage permettant de produire l'étincelle nécessaire à la combustion d'un mélange air/carburant (et plus précisément air/essence). Le cylindre **3** est d'une part associé à une soupape **6** d'admission qui contrôle une admission du mélange air/carburant à l'intérieur de la chambre **4** de combustion, et d'autre part à une soupape **7** d'échappement qui contrôle une évacuation, hors de la chambre **4** de combustion, de gaz d'échappement issus de la combustion du mélange air/carburant.

En règle générale, un moteur **2** à allumage commandé comprend entre trois et huit cylindres **3** auxquels est associée, pour chaque cylindre **3,** une bougie **5** d'allumage.

Le moteur **2** à allumage commandé est piloté par un calculateur **8** (également appelé contrôle moteur), ce calculateur **8** étant programmé pour répondre au mieux à la volonté du conducteur retransmise notamment via une pédale d'accélérateur (non représentée). Ainsi, le calculateur **8** reçoit diverses informations, et notamment celle issue d'un capteur positionné sur la pédale d'accélérateur, cette information lui permettant de contrôler notamment le régime de fonctionnement du moteur **2.**

Le moteur **2** à allumage commandé fonctionne selon un cycle de quatre temps définit dans l'ordre suivant : une admission, une compression, une combustion et une détente, et un échappement.

Le travail produit par le moteur **2** à allumage commandé provient de la combustion, initiée par la bougie **5** d'allumage du mélange air/carburant compressé au sein du cylindre **3** par un piston **9** se déplaçant de façon alternative, entre une position extrême haute et une position extrême basse, par rapport au cylindre **3,** respectivement appelées position Point Mort Haut (PMH) et position Point Mort Bas (PMB). Le mouvement alternatif du piston **9** permet l'entraînement en rotation d'un vilebrequin **10** par l'intermédiaire d'une bielle **11** reliant le piston **9** au vilebrequin **10,** le mouvement du vilebrequin **10** étant ensuite transmis aux roues par l'intermédiaire de différents mécanismes.

Lors d'un cycle moteur, l'allumage du mélange air/carburant, via la bougie **5,** se produit en amont de la position PMH du piston **9** à l'issue de la phase de compression. Afin de calibrer l'allumage, les motoristes définissent un paramètre appelé « avance à l'allumage » correspondant à un écart angulaire (exprimé par exemple en degré), ayant pour référentiel le vilebrequin **10,** entre l'instant de l'allumage et l'instant du passage du piston **9** en position point mort haut (PMH), la position point mort haut (PMH) du piston **9** correspondant à la position de référence.

Tel qu'illustré sur la figure 2, chaque bougie **5** d'allumage est pilotée par le calculateur **8.** Le calculateur **8** permet, grâce aux retours d'informations des différents capteurs, de contrôler indépendamment l'allumage de chaque cylindre **3** et par conséquent l'avance à l'allumage. Le calculateur **8** est ainsi relié avec différents capteurs qui lui fournissent en temps réel des données sur le véhicule **1** et plus particulièrement sur le moteur **2.** Parmi l'ensemble des paramètres de fonctionnement moteur pris en compte pour l'invention, on trouve notamment :
- le Régime Moteur **RM :** il correspond au nombre de rotation effectué par le moteur **2,** et plus précisément par le vilebrequin **10,** par unité de temps. Il est exprimé généralement en tour/minute et est mesuré par un capteur de vitesse de rotation ;
- le Taux de Remplissage du Cylindre **TRC** : il correspond au rapport entre la quantité de mélange air/carburant admis (mesurée notamment par un capteur de pression) et la quantité théoriquement admissible. Il est généralement exprimé sous la forme d'un pourcentage ; il est représentatif en fait de la charge du cylindre **3.**
- la Température Moteur **TM** : elle correspond de préférence à la température du liquide refroidissement au niveau du cylindre **3.** Elle est mesurée généralement par une sonde de température ;
- la position de l'accélérateur : elle correspond au niveau d'enfoncement de la pédale d'accélérateur, cet enfoncement étant généralement mesuré par un capteur de position sur la pédale d'accélérateur ;
- la présence et l'intensité du cliquetis : ces informations sont généralement obtenues par l'intermédiaire par exemple d'un capteur **12** piézoélectrique positionné sur les cylindres tel que représenté sur la figure 2.

Le calculateur **8** contrôle le couple moteur par le réglage de l'avance à l'allumage du moteur **2** en fonction des données d'entrée suivant deux modes de fonctionnement :
- mode de fonctionnement subordonné, c'est-à-dire en prenant en compte la volonté du conducteur retransmise au calculateur **8** via le capteur de position de la pédale d'accélérateur,
- mode de fonctionnement autonome (on parle également de mode de fonctionnement en structure couple), c'est-à-dire en ignorant la volonté du conducteur retransmise au calculateur **8** via le capteur de position de la pédale d'accélérateur.

Le calculateur **8** fonctionne de façon autonome notamment sur des courtes périodes en présence de fortes variations du couple moteur (par exemple un démarrage en côte ou un changement de vitesse) afin notamment de lisser le couple moteur et éviter des à-coups néfastes pour le confort de conduite.

Les moteurs **2** à allumage commandé sont soumis au cliquetis, phénomène d'auto-inflammation connu des motoristes, engendrant la combustion à contretemps d'une partie du mélange air/carburant indépendamment de l'étincelle de la bougie **5** d'allumage et provoquant notamment des nuisances sonores au sein de l'habitacle, une dégradation accélérée des éléments du moteur (notamment des pistons **9**) ou encore une augmentation de la consommation de carburant.

Le calculateur **8** comprend ainsi différentes corrections complémentaires, susceptibles d'être appliquées, lors de la détection par capteur **12** du cliquetis, celles-ci permettant de réduire l'avance à allumage pour permettre d'atténuer, et dans le meilleur des cas de stopper le cliquetis.

Le cliquetis peut être présent soit de façon ponctuelle soit de façon continue suivant les facteurs.

Lors d'une apparition ponctuelle de cliquetis, le calculateur **8** met en place une correction **13** dite curative visant à stopper rapidement le phénomène de cliquetis lors de son apparition. Cette correction **13** curative consiste à appliquer une rectification curative correspondant à l'application d'un retrait forfaitaire (valeur prédéfinie lors de la programmation, par exemple égale à 7°) sur une valeur initiale d'avance à l'allumage à chaque détection du cliquetis puis à retourner sur la valeur initiale de l'avance à allumage lorsqu'il n'y a plus de cliquetis sur une durée suffisamment importante (par exemple égale à 10s).

Lors d'une apparition continue de cliquetis, le calculateur **8** applique une correction **14** dite adaptative obtenue par apprentissage qui récupère tout ou partie de la correction **13** curative afin d'effectuer une série d'opérations (et notamment une moyenne des corrections **13** curatives) permettant d'obtenir une rectification adaptative correspondant à l'application d'un retrait calculé (valeur calculée selon un modèle prédéfini) sur une valeur initiale d'avance à l'allumage.

La correction **14** adaptative est ainsi mise en place notamment lorsque l'apparition du cliquetis provient de l'emploi d'un carburant dégradé, c'est-à-dire un carburant ayant un RON plus faible que le carburant conseillé par le motoriste, étant donné que dans ce cas-ci il est nécessaire d'adapter l'allumage du moteur **2** sur une période représentant au minimum la consommation du carburant dégradé présent au sein du réservoir. C'est notamment le cas dans les pays où l'accès au carburant de qualité est limité, l'utilisateur étant ainsi contraint d'utiliser un carburant dégradé.

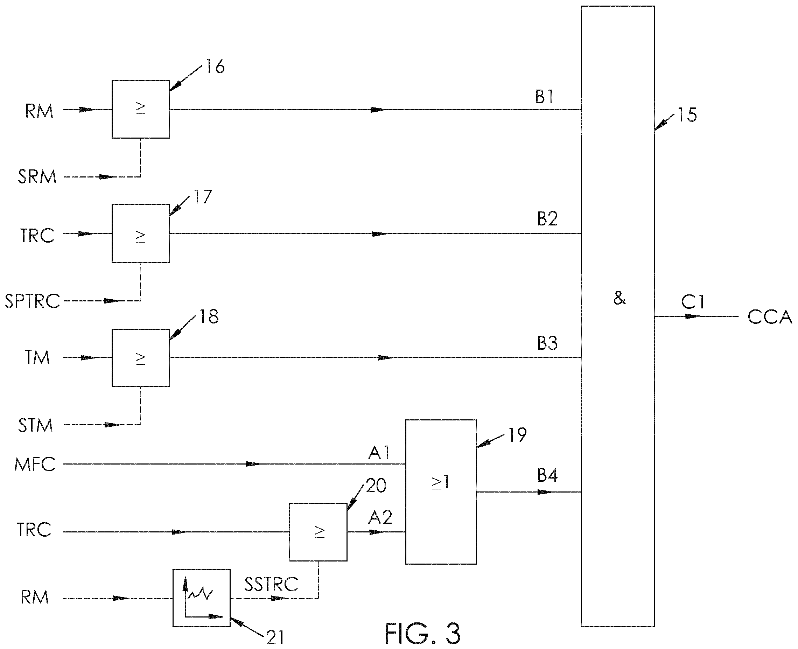

Tel que représenté sur la figure 3, un procédé de réglage de l'avance à l'allumage permettant, sous certaines conditions, l'apprentissage autrement dit le Calcul de la Correction Adaptative **CCA** est mis en place par le calculateur, ce procédé étant représenté, pour des raisons de clarté, sous la forme d'un diagramme logique (symbolisation d'après la certification AFNOR correspondant à l'Association Française de NORmalisation). Ainsi, le fait de calculer ou non la correction adaptive **CCA,** pour atténuer ou stopper le cliquetis, tel que l'on peut le voir sur le diagramme, est le résultat d'une équation **15** associée à un opérateur logique ET à quatre variables d'entrée **B1** à **B4** :
- **B1** est un résultat booléen d'une comparaison **16** entre le régime moteur **RM** et un Seuil primaire de Régime Moteur **SRM** prédéfini, cette comparaison **16** étant définie de la manière suivante :
   - Si **RM≥SRM** alors **B1**=1
   - Si **RM<SRM** alors **B1**=0
- **B2** est un résultat booléen d'une comparaison **17** entre le taux de remplissage du cylindre **TRC** et un Seuil Primaire du Taux de Remplissage du Cylindre **SPTRC** prédéfini, cette comparaison **17** étant définie de la manière suivante :
   - Si **TRC≥SPTRC** alors **B2**=1
   - Si **TRC<SPTRC** alors **B2**=0
- **B3** est un résultat booléen d'une comparaison **18** entre la température moteur **TM** et un Seuil primaire de Température Moteur **STM** prédéfini, cette comparaison **18** étant définie de la manière suivante :
   - Si **TM≥STM** alors **B3**=1
   - Si **TM<STM** alors **B3**=0
- **B4** est le résultat booléen d'une équation **19** associée à un opérateur logique OU à deux variables d'entrée **A1** et **A2** :
   - **A1** est une valeur booléenne fonction du Mode de Fonctionnement du Calculateur **MFC** définie de la manière suivante :
      ▪ Si le calculateur **8** contrôle l'allumage du moteur **2** en fonction de la position de l'accélérateur (mode de fonctionnement subordonné) alors **A1**=1
      ▪ Si le calculateur **8** contrôle l'allumage du moteur **2** indépendamment de la position de l'accélérateur (mode de fonctionnement autonome) alors **A1**=0
   - **A2** est un résultat booléen d'une comparaison **20** entre le taux de remplissage du cylindre **TRC** et un Seuil Secondaire de Taux de Remplissage du Cylindre **SSTRC** déterminé à partir du régime moteur **RM** et d'une cartographie **21** moteur, cette comparaison **20** étant définie de la manière suivante :
      ▪ Si **TRC≥SSTRC** alors **A2**=1
      ▪ Si **TRC<SSTRC** alors **A2**=0

Ainsi, le fait de calculer ou non la correction adaptative **CCA** dépend du résultat booléen d'une variable de sortie **C1** de l'équation **15** associée à l'opérateur logique ET définit ci-dessus, cette variable **de** sortie **C1** étant définie de la manière suivant :
- Si **C1**=1 alors le calcul de la correction adaptative **CCA** est effectué.
- Si **C1**=0 alors le calcul de la correction adaptative **CCA** n'est pas effectué.

Afin de faciliter la compréhension du procédé de réglage de l'avance à allumage, on rappelle respectivement ci-dessous la table de vérité de l'opérateur logique OU puis la table de vérité de l'opérateur logique ET selon leurs propres variables d'entrée et de sortie :

| **A1** | **A2** | **B4** |
|---|---|---|
| 0 | 0 | 0 |
| 0 | 1 | 1 |
| 1 | 0 | 1 |
| 1 | 1 | 1 |

| **B1** | **B2** | **B3** | **B4** | **C1** |
|---|---|---|---|---|
| 0 | 0 | 0 | 0 | 0 |
| 0 | 0 | 0 | 1 | 0 |
| 0 | 0 | 1 | 0 | 0 |
| 0 | 0 | 1 | 1 | 0 |
| 0 | 1 | 0 | 0 | 0 |
| 0 | 1 | 0 | 1 | 0 |
| 0 | 1 | 1 | 0 | 0 |
| 0 | 1 | 1 | 1 | 0 |
| 1 | 0 | 0 | 0 | 0 |
| 1 | 0 | 0 | 1 | 0 |
| 1 | 0 | 1 | 0 | 0 |
| 1 | 0 | 1 | 1 | 0 |
| 1 | 1 | 0 | 0 | 0 |
| 1 | 1 | 0 | 1 | 0 |
| 1 | 1 | 1 | 0 | 0 |
| 1 | 1 | 1 | 1 | 1 |

Lorsque le calculateur **8** contrôle l'allumage du moteur **2** en fonction de la position de l'accélérateur (mode de fonctionnement subordonné) (**A1**=1) on a toujours **B4**=1. Le procédé de réglage de l'avance à l'allumage permettant le calcul de la correction adaptative **CCA** comprend alors uniquement les étapes suivantes :
- comparaison **16** du régime moteur **RM** à un seuil primaire de régime moteur **SRM** prédéfini ;
- comparaison **17** du taux de remplissage du cylindre **TRC** à un seuil primaire de taux de remplissage du cylindre **SPTRC** prédéfini ;
- comparaison **18** de la température moteur **TM** à un seuil primaire de température moteur **STM** prédéfini ;
- calcul d'une correction adaptative **CCA** de l'avance à l'allumage si le régime moteur **RM,** le taux de remplissage du cylindre **TRC** et la température moteur **TM** dépassent tous à la hausse, autrement dit sont tous supérieurs à leurs seuils primaires respectifs.

Conformément à l'invention, afin d'étendre la possibilité de réaliser l'apprentissage sous certaines conditions aussi en mode de fonctionnement autonome, lorsque le calculateur **8** contrôle l'allumage du moteur **2** en mode de fonctionnement autonome (**A1**=0), le procédé de réglage de l'avance, ci-dessus exprimé, comprend une étape supplémentaire de comparaison **20** de la charge du cylindre 3 à un seuil secondaire de charge déterminé. Ici la charge du cylindre 3 étant représenté par un taux de remplissage du cylindre **TRC,** le seuil secondaire de charge déterminé correspond à un seuil secondaire de taux de remplissage du cylindre **SSRTC.** Ce seuil secondaire de taux de remplissage du cylindre **SSRTC,** est de préférence déterminé pour des raisons de simplicité à partir du régime moteur **RM** et d'une cartographie **21** moteur, et en ce que le calcul de la correction adaptative **CCA** est réalisé si:
- le calculateur **8** contrôle l'allumage du moteur **2** indépendamment de la position de l'accélérateur (mode de fonctionnement autonome) ;
- le taux de remplissage du cylindre **TRC** est supérieur au seuil secondaire de taux de remplissage du cylindre **SSTRC.**

Les différents seuils (le seuil primaire de régime moteur **SRM,** le seuil primaire du taux de remplissage du cylindre **SPTRC,** le seuil primaire de température moteur **STM** et le seuil secondaire du taux de remplissage du cylindre **SSTRC**) sont réglables, ce qui permet d'avoir une grande flexibilité.

Le modèle permettant le calcul de la correction adaptative **CCA** a été établi à partir d'un mode de fonctionnement normal. On entend par « normal » un fonctionnement du moteur **2** à couple sensiblement constant dans lequel les variations de l'avance à l'allumage sont relativement faibles (par exemple -10/+5 degrés).

Ainsi, cette étape supplémentaire permet de conditionner le calcul de la correction adaptative **CCA,** lorsque le calculateur **8** contrôle l'allumage indépendamment de la position de l'accélérateur (mode de fonctionnement autonome), aux phases d'utilisation du véhicule **1** soumises aux cliquetis dans lesquelles le taux de remplissage du cylindre **TRC** est relativement important (par exemple **TRC** est au moins égal à 80% du taux de remplissage maximum du cylindre **3**), ces phases de vie ayant des variations d'avance à l'allumage relativement faibles proche du mode de fonctionnement normal qui n'entraînent ainsi aucun risque de fausses détections de cliquetis.

Le procédé de réglage de l'avance à l'allumage offre les avantages suivants.

Premièrement, le procédé mis en place permet d'accroître le champ d'action de la correction adaptative **14.** En effet, selon le procédé mis en place, on réalise le calcul de la correction adaptative **CCA** sous conditions lorsque le calculateur **8** contrôle l'allumage indépendamment de la position de l'accélérateur, ce procédé permettant de couvrir ainsi davantage de phases d'utilisation du véhicule **1** soumises au cliquetis, au bénéfice de l'agrément de conduite, de la fiabilité du moteur **2,** de la consommation de carburant du véhicule **1** et de la réduction des émissions de gaz polluants.

Deuxièmement, la mise en place de ce procédé de réglage permet de maintenir un degré de prestation équivalent (confort, fiabilité, consommation et émission) dans les pays où l'accès au carburant de qualité est limité.

Troisièmement, ce procédé offre une grande flexibilité au niveau de la mise au point puisque les différents seuils présents au sein du procédé sont réglables.

## Revendications

1. Procédé de réglage de l'avance à l'allumage d'un moteur (2) à allumage commandé comprenant un cylindre (3) et équipant un véhicule destiné à être conduit par un conducteur, le procédé étant piloté par un calculateur (8) comprenant :
- une procédure de correction curative visant à réduire rapidement le phénomène de cliquetis lors de son apparition,
- un mode de contrôle du couple moteur dit autonome ignorant la volonté du conducteur retransmise au calculateur **(8)** via un capteur de position d'une pédale d'accélérateur du véhicule,
- un mode de contrôle du couple moteur dit subordonné prenant en compte la volonté du conducteur retransmise au calculateur (8) via le capteur de position de la pédale d'accélérateur,
- une procédure d'apprentissage d'une correction de l'avance à l'allumage qui utilise tout ou partie de la correction curative appliquée lorsque les conditions de fonctionnement ont fait apparaître du cliquetis,
cette procédure d'apprentissage étant autorisée lorsque le mode de contrôle du couple moteur est subordonné et qu'un ensemble de paramètres de fonctionnement moteur prédéterminés comprenant le régime moteur (RM), une température moteur (TM), une information représentative de la charge du cylindre dépassent tous à la hausse respectivement un seuil primaire de régime moteur (SRM) prédéfini, un seuil primaire de charge du cylindre prédéfini, un seuil primaire de température moteur (STM) prédéfini,
**caractérisé en ce que** cette procédure d'apprentissage est autorisée également en mode de contrôle du couple moteur autonome lorsque l'ensemble de paramètres de fonctionnement moteur prédéterminés dépassent tous à la hausse leurs seuils primaires respectifs et que de plus la charge du cylindre dépasse à la hausse un seuil secondaire de charge déterminé.

2. Procédé selon la revendication 1, **caractérisé en ce que** l'information représentative de la charge du cylindre est un taux de remplissage du cylindre (TRC), le seuil primaire de charge prédéfini correspondant à un seuil primaire de taux de remplissage du cylindre (SPTRC) et le seuil secondaire de charge correspondant à un seuil secondaire de taux de remplissage du cylindre (SSTRC).

3. Procédé selon la revendication 2, **caractérisé en ce que** le seuil secondaire de taux de remplissage du cylindre (SSTRC) est déterminé à partir du régime moteur (RM) et d'une cartographie **(21).**

4. Procédé selon la revendication 3, **caractérisé en ce que** le seuil secondaire de taux de remplissage du cylindre (SSTRC) est au moins égal à 80% du taux de remplissage maximum du cylindre (3).

5. Procédé de réglage de l'avance à l'allumage selon l'une des revendications 2 à 4, **caractérisé en ce que** le seuil primaire de régime moteur (SRM), les seuils primaire et secondaire de taux de remplissage du cylindre (SPTRC, SSTRC) et le seuil primaire de température moteur (STM) sont réglables.

6. Procédé selon l'une des revendications 1 à 5, **caractérisé en ce que** la température moteur (TM) est une température du liquide refroidissement au niveau du cylindre (3).

7. Calculateur **(8), caractérisé en ce qu'**il comprend les moyens d'acquisition, de traitement par instructions logicielles stockées dans une mémoire ainsi que les moyens de commande requis à mise en oeuvre du procédé de réglage de l'avance à l'allumage selon l'une des revendications précédentes.

8. Véhicule **(1)** automobile comprenant un moteur à allumage commandé piloté par un calculateur **(8)** selon la revendication précédente.

## Patentansprüche

1. Verfahren zum Einstellen der Zündvorstellung eines Motors (2) mit gesteuerter Zündung, der einen Zylinder (3) umfasst und ein Fahrzeug ausstattet, das dazu bestimmt ist, von einem Fahrer gefahren zu werden, wobei das Verfahren von einem Rechner (8) gesteuert wird, der Folgendes umfasst:
- eine Vorgehensweise zur behebenden Korrektur, die darauf abzielt, die Klopferscheinung bei ihrem Auftreten zu verringern,
- einen Steuermodus des Motordrehmoments, der autonom genannt wird, der den Willen des Fahrers ignoriert, der an den Rechner (8) über einen Positionssensor eines Gaspedals des Fahrzeugs weiter übertragen wird,
- einen Steuermodus des Motordrehmoments, der untergeordnet genannt wird, der den Willen des Fahrers berücksichtigt, der an den Rechner (8) über den Positionssensor des Gaspedals weiter übertragen wird,
- eine Lernvorgehensweise einer Korrektur des Zündungsvorlaufs, die die gesamte oder einen Teil der behebenden Korrektur verwendet, die angewandt wird, wenn die Betriebsbedingungen Klopfen erscheinen haben lassen,
wobei diese Lernvorgehensweise gestattet ist, wenn der Steuermodus des Motordrehmoments untergeordnet ist, und eine Einheit vorbestimmter Motorbetriebsparameter, die die Motordrehzahl (RM), eine Motortemperatur (TM), eine Information, die die Last des Zylinders darstellt, umfasst, die alle das jeweilige Erhöhen eines vorbestimmten Motordrehzahl-Primärschwellenwerts (SRM), einen vordefinierten Last-Primärschwellenwert, einen vorbestimmten Motortemperatur-Primärschwellenwert überschreiten,
**dadurch gekennzeichnet, dass** diese Lernvorgehensweise auch im Steuermodus des autonomen Motordrehmoments gestattet ist, wenn sämtliche vorbestimmten Motorbetriebsparameter alle ihre jeweiligen Primärschwellenwerte überschreiten und außerdem die Last des Zylinders die Höhe eines bestimmten Last-Sekundärschwellenwerts überschreitet.

2. Verfahren nach Anspruch 1, **dadurch gekennzeichnet, dass** die Information, die für die Last des Zylinders repräsentativ ist, eine Füllungsrate des Zylinders (TRC) ist, wobei der vorbestimmte Last-Primärschwellenwert einem Füllungsraten-Primärschwellenwert des Zylinders (SPTRC) entspricht, und der Last-Sekundärschwellenwert einem Füllungsraten-Sekundärschwellenwert des Zylinders (SSTRC) entspricht.

3. Verfahren nach Anspruch 2, **dadurch gekennzeichnet, dass** der Füllungsraten-Sekundärschwellenwert des Zylinders (SSTRC) ausgehend von der Motordrehzahl (RM) und einer Kartographie (21) bestimmt wird.

4. Verfahren nach Anspruch 3, **dadurch gekennzeichnet, dass** der Füllungsraten-Sekundärschwellenwert des Zylinders (SSTRC) mindestens gleich 80 % der maximalen Füllungsrate des Zylinders (3) ist.

5. Verfahren zum Einstellen des Zündungsvorlaufs nach einem der Ansprüche 2 bis 4, **dadurch gekennzeichnet, dass** der Motordrehzahl-Primärschwellenwert (SRM), der Füllungsraten-Primärschwellenwert und - Sekundärschwellenwert des Zylinders (SPTRC, SSTRC) und der Motortemperatur-Primärschwellenwert (STM) einstellbar sind.

6. Verfahren nach einem der Ansprüche 1 bis 5, **dadurch gekennzeichnet, dass** die Motortemperatur (TM) eine Temperatur der Kühlflüssigkeit im Bereich des Zylinders (3) ist.

7. Rechner (8), **dadurch gekennzeichnet, dass** er Mittel zum Erfassen, Verarbeiten durch Softwareanweisungen, die in einem Speicher gespeichert sind, sowie Steuermittel umfasst, die für die Umsetzung des Einstellverfahren des Zündungsvorlaufs nach einem der vorhergehenden Ansprüche erforderlich sind.

8. Kraftfahrzeug (1), das einen Motor mit gesteuerter Zündung umfasst, die von einem Rechner (8) nach dem vorhergehenden Anspruch gesteuert wird.

## Claims

1. A method for adjusting the ignition advance of a spark ignition engine (2) including a cylinder (3) and equipping a vehicle intended to be driven by a driver, the method being controlled by a computer (8) including:
- a curative correction procedure, aiming to rapidly reduce the pinking phenomenon at its appearance,
- an engine torque control mode, designated as autonomous, overriding the wish of the driver, retransmitted to the computer (8) via a position sensor of an accelerator pedal of the vehicle,
- an engine torque control mode, designated as subordinate, taking into account the wish of the driver, retransmitted to the computer (8) via the position sensor of the accelerator pedal,
- a teach-in procedure of a correction of the ignition advance which uses all or part of the curative correction applied when the operating conditions have caused pinking to appear,
this teach-in procedure being authorized when the control mode of the engine torque is subordinate and when a set of predetermined engine operating parameters including the engine speed (RM), an engine temperature TM, information representative of the charge of the cylinder all exceed upwards respectively a primary predefined engine speed threshold (SRM), a primary predefined cylinder charge threshold, a primary predefined engine temperature threshold (STM),
**characterized in that** this teach-in procedure is also authorized in autonomous control mode of the engine torque when all of the predetermined engine operating parameters all exceed upwards their respective primary thresholds and that in addition the charge of the cylinder exceeds upwards a specified secondary charge threshold.

2. The method according to Claim 1, **characterized in that** the information representative of the charge of the cylinder is a filling rate of the cylinder (TRC), the predefined primary charge threshold corresponding to a primary threshold of the filling rate of the cylinder (SPTRC), and the secondary charge threshold corresponding to a secondary threshold of the filling rate of the cylinder (SSTRC).

3. The method according to Claim 2, **characterized in that** the secondary threshold of the filling rate of the cylinder (SSTRC) is determined from the engine speed (RM) and from a mapping (21).

4. The method according to Claim 3, **characterized in that** the secondary threshold of the filling rate of the cylinder (SSTRC) is at least equal to 80% of the maximum filling rate of the cylinder (3).

5. The method for adjusting the ignition advance according to one of Claims 2 to 4, **characterized in that** the primary engine speed threshold (SRM), the primary and secondary thresholds of the filling rate of the cylinder (SPTRC, SSTRC), and the primary engine temperature threshold (STM) are able to be adjusted.

6. The method according to one of Claims 1 to 5, **characterized in that** the engine temperature TM is a temperature of the of the cooling fluid at the cylinder (3).

7. A computer (8), **characterized in that** it includes the means for acquisition, for processing by software instructions stored in a memory, and also the command means required for the implementation of the method for adjusting the ignition advance according to one of the preceding claims.

8. A motor vehicle (1) including a spark ignition engine controlled by a computer (8) according to the preceding claim.
